# EUROPEAN PATENT APPLICATION

(11) **EP 4 328 136 A1**
(43) Date of publication of application: **28.02.2024**
(21) Application number: 22791173.2
(22) Date of filing: 18.04.2022
(51) Int. Cl.: B64D 23/00, B64D 29/00, B64D 27/24, B64C 11/48

(54) **FLAP-TYPE AERONAUTICAL PROPULSION DEVICE WITH PROPELLER ENGINE**

(30) Priority: 18.04.2021 ES 202130796 U
(71) Applicant: Martin Alexandre, Emilio, 28411 Morazarzal Madrid (ES)
(72) Inventor: Martin Alexandre, Emilio, 28411 Morazarzal Madrid (ES)
(74) Representative: Herrero & Asociados, S.L.
(86) International application number: PCT/ES2022/070237
(87) International publication number: WO 2022/223862

(57) **Abstract**

Consisting of a flap-type aerodynamic surface on the wing(s) (2) above the fuselage (1) of an aircraft with control surfaces (5) of the wing (2), the length of the device in the wing span direction being greater than or equal to the mid-chord of the flap, and comprising a thrust propeller engine (4), converting it into a propulsive flapper (3).

## Description

### OBJECT OF THE INVENTION

The present invention relates to a flap-type aeronautical device incorporating a helical propeller engine as a propellant, a characteristic geometrical property of which is that its length in the direction of the wing span is greater than or equal to the chord or mean width of the flap with propellant engine.

It offers a solution for integrating helical propeller propulsion systems in an optimal way with conventional wing aerodynamics, as the new aeronautical propulsion device enables the integration of at least the following seven different functionalities:
- Act as a hyper-sustaining mechanism for the wing.
- To solve the problem of airfoil boundary layer detachment at high airfoil or flap angles of attack due to the forced air suction effect produced by the engines.
- Dramatically increase the lift effect of the wing airfoil due to the increased airflow effect on the airfoil provided by the suction of the propulsion engine.
- Substantially improve the lift effect of the airfoil of the wing due to the laminar conditions of the airflow over the airfoil by being located in the upstream or upstream region of the propeller's turning plane, solving the problem of turbulent flow induced on an airfoil that would be located in the turbulent or downstream region of the turning plane of a propeller located at the leading edge of the wing.
- Provide a vertical thrust component of different magnitude depending on the inclination of the engine shaft that is aligned with the angle of the propulsive flap, enabling the realisation of vertical take-off and landing aircraft.
- Use the same flap movement mechanism for the propulsion engine movement, greatly reducing the weight and complexity of using separate mechanisms for flap and engine movement.
- To solve the problem of abrupt transition from stationary multi-rotor flight mode to fixed-wing flight mode and vice versa, since the fixed-wing airfoil has effective aerodynamic angles of attack at all times from the beginning of the aircraft's forward flight path.

The industrial application of this invention lies within the sector of aeronautical propulsion systems and equipment, and more specifically, propulsion devices installed in flaps.

### BACKGROUND TO THE INVENTION

Although no invention identical to the one described has been found, we set out below the documents found that reflect the state of the art related to it.

Document ES2360354U relates to an airfoil airfoil wing having a wingspan and comprising an airfoil, the airfoil comprising: at least one front airfoil element having an extrados and an intrados; at least one rear airfoil element having an extrados and an intrados; and at least one slot defined by the airfoil during at least one transonic condition of the airfoil, the slot allowing a portion of the air flowing along the intrados of the front airfoil element to split and flow over the extrados of the rear airfoil element to achieve a performance enhancement in the transonic condition. However, there is no evidence of any propulsive element installed in the wing flap itself, as claimed in the requested invention.

ES2573095U describes a lift and propulsion device, for an aerofoil with vertical or short take-off and landing, by the lift effect obtained by blowing an airflow produced by an airflow generator over lift surfaces attached to a support structure, the device comprising two substantially rectilinear longitudinal lift surfaces arranged on both sides of the support structure and extending substantially parallel to the warping axis of the device, the two longitudinal lift surfaces being symmetrical with respect to each other with respect to the plane defined by the warping and yawing axes. As in the previous document, no mention is made of any propeller motor or other type of propellant installed and integrated in the vertical or short take-off and landing aerofoil flaps of the aforementioned utility model.

ES1236685U claims a vertical take-off and landing aircraft, consisting of an unmanned aircraft in principle, characterised by a driftless fuselage comprising a pair of wings, one at the lower front part of the fuselage and the other at the upper rear part, each wing comprising a pair of engines, each located solidly to the wing at its marginal edge or tip in the case of the forward wing, and at its marginal edge on the trailing edge side in the case of the aft wing, and comprising control surfaces which can act either as ailerons or flaps simultaneously on the forward wing, and vertical stabilising surfaces on the marginal edges of the aft wing; and both wings are pivotable about their major axis transverse to the longitudinal axis of the fuselage, so that they can be oriented from a horizontal wing position or angle of attack near zero, to a vertical position or angle of attack near 90 degrees. In the latter document, the engines described are located solidly to the wing at its marginal edge, whereas the invention applied for locates the propulsion engines in the aircraft flaps, so that the two inventions differ.

US10597133 describes an aircraft where the propulsor engines are necessarily arranged in a distributed manner in each half wing, whereas in the claimed invention they can also be arranged in a unique manner in the device of each half wing. Furthermore, in this prior art the propulsion motors only produce an aerodynamic flow acceleration, either by suction or blowing, on one of the two sides of the airfoil of the wing, intrados or extrados, being necessary to duplicate the devices if aerodynamic flow acceleration is to be obtained simultaneously on the inboard or on the outboard side; on the other hand, the present invention, with the same device in which the plane of the propeller turning rotor is located on the trailing edge of the airfoil, achieves airflow acceleration on both surfaces of the wing, or inboard and outboard side of the airfoil.

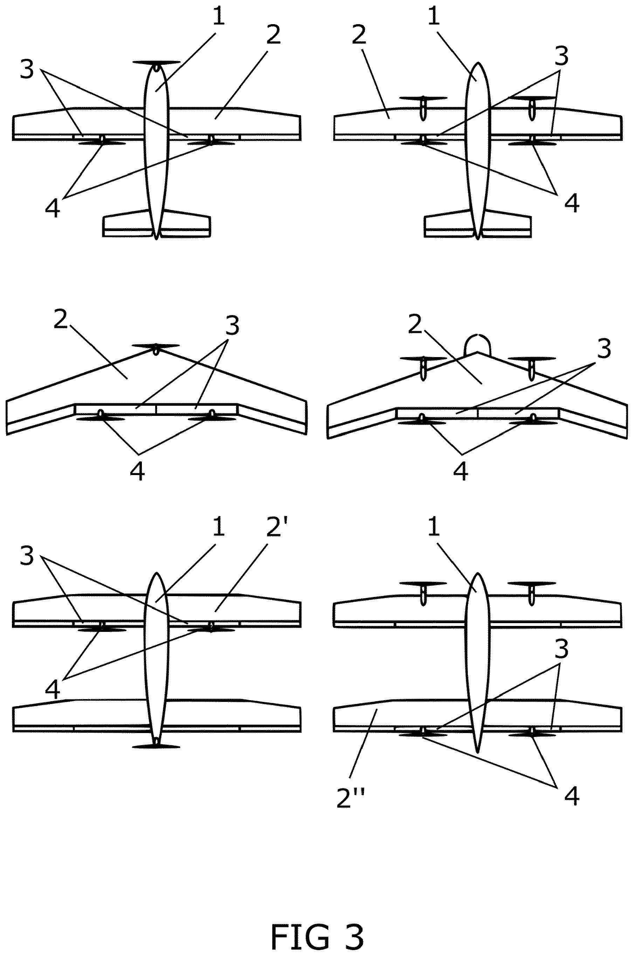

WO2020186305A1 relates to another aircraft whose propulsion engines are necessarily arranged at the leading edge of the wing, thereby inducing a highly turbulent flow over the wing, the wing being located in the highly turbulent region downstream of the plane of the propeller turning rotor. In contrast, in the proposed invention, the plane of the propeller turning rotor is located at the trailing edge of the wing, so that the airfoil of the wing is located upstream of it, in the region of mainly laminar flow. On the other hand, in the aforementioned document, as the propulsion engines are necessarily located on the leading edge of the wing, and connected by means of a mechanism to the moving flap, they impose a significant limitation on the maximum chord dimension of the fixed part of the wing, as they require mechanical connection elements that are larger the greater the chord, making it impossible to implement them on wings or in wing areas where a large chord length of the fixed part of the wing airfoil is required, such as in the main chord area of an arrow wing or in one of the flying wing type aircraft realisations shown in Figure 3 below.

### DESCRIPTION OF THE INVENTION

The aerofoil propulsion device with propeller motor of the present invention is constituted from a flap-type hypersonic surface, either single or arranged in conjunction and continuously with other movable flap surfaces, incorporating a propeller motor with thrust propeller on the flap and in a direction aligned with the chord of the flap, characterised by having a longitudinal geometric dimension in the direction of the wing span of the flap or of the array of continuous movable flap surfaces, which is at least equal to or greater than the mid-chord of the flap or of the array of continuous movable flap surfaces.

### BRIEF DESCRIPTION OF THE DRAWINGS

For a better understanding of the present description, drawings depicting a preferred embodiment of the present invention are provided:

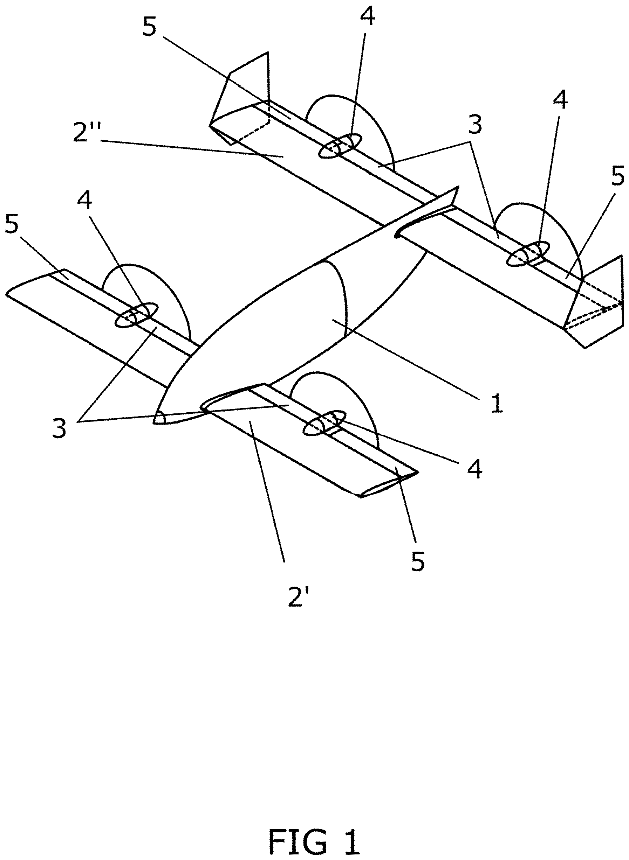

Figure 1: Conventional perspective view of a preferred embodiment of the propeller-driven flap propulsion device of the present invention on an aircraft with two wings in tandem, and the propellers mounted on flaps in a horizontal flight orientation.

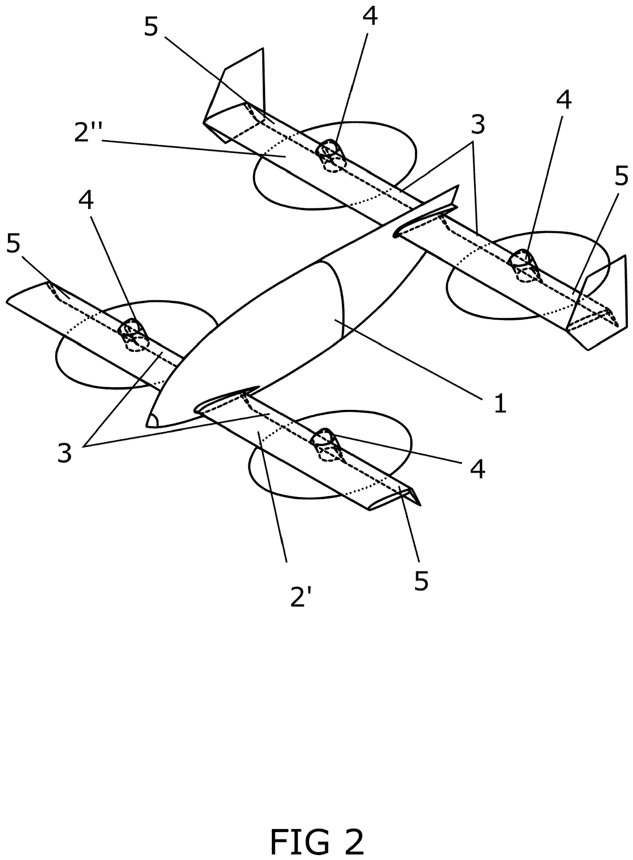

Figure 2: Conventional perspective view of a preferred embodiment of the propeller-driven flap propulsion device of the present invention in an aircraft with two wings in tandem, and the propellers mounted on flaps in vertical flight orientation.
Figure 3: Plan view of a set of propulsive flap realisations in different aircraft configurations, preferably unmanned.

The numerical references shown in these figures correspond to the following constituent elements of the invention:
1. Fuselage
2. Wings
   2'. Front
   2". Rear
3. Flap propellant
4. Engine with pusher propeller
5. Control surface

### DESCRIPTION OF A PREFERRED EMBODIMENT

A preferred embodiment of the aerofoil propulsion device with propeller engine of the present invention, with reference to numerical references, may be based on an unmanned aircraft, with two wings (2) in tandem located on a fuselage (1 ), the rear wing (2") of the fuselage (1) being located high in relation to the front wing (2'), each of the four half-wings respectively comprising corresponding thrust flap surfaces (3), on which are arranged respectively four engines with thrust propellers (4), and each of the two rear half-wings respectively comprising two control surfaces (5) of the wing (2).

The motor is preferably an electric coaxial motor with two thrust propellers rotating in opposite directions.

The length of the device in the wing span direction (2) is greater than or equal to the mid-chord of the propulsive flap (3), and when the device is positioned adjacent to one or more independent flaps, the length of the device in the wing span direction of the propulsive flap assembly and the adjacent flap(s) is greater than or equal to the mid-chord of the propulsive flap assembly and the adjacent flap(s).

In other embodiments, the aircraft may have two wings (2) and two half-wings respectively, or have the fuselage (1) integrated with the wings (2), or any other combination of number of wings (2) and their integration with the fuselage (1), and the device of the present invention may be repeated once or several times on the same wing or half-wing.

## Claims

1. An aeronautical flap propulsion device with a propeller engine, consisting of a flap-type aerodynamic surface on the wing(s) (2) on the fuselage (1) of an aircraft with control surfaces (5) of the wing (2), **characterised in that** the length of the device in the wing span direction is greater than or equal to the mid-chord of the flap, and comprises a thrust propeller engine (4), converting it into a propulsive flap (3).

2. Aeronautical flap propulsion device with propeller engine, according to claim 1, **characterised in that** when placed adjacent to one or more independent flaps, the length in the wing span direction (2) of the propulsive flap assembly (3) and the adjacent flap(s) is greater than or equal to the average chord of the propulsive flap assembly (3) and the adjacent flap(s).

3. Aeronautical flap propulsion device with propeller engine, according to claim 1, where the engine with thrust propeller (4) is of the coaxial type with two thrust propellers rotating in opposite directions.

4. Aeronautical flap propulsion device with propeller engine, according to claim 1, **characterised by** the fact that it is arranged repeatedly once or several times on the same wing (2) or half-wing.
